# EUROPEAN PATENT SPECIFICATION

(11) **EP 1 950 718 B1**
(45) Date of publication and mention of the grant of the patent: **30.09.2009**
(21) Application number: 08100610.8
(22) Date of filing: 17.01.2008
(51) Int. Cl.: G08B 21/00, G05B 23/02

(54) **Methods and systems for monitoring approach of rotary wing aircraft**
Verfahren und Systeme zur Überwachung der Landung eines Drehflügelflugzeugs
Procédés et systèmes pour la surveillance de l'approche d'un aéronef à voilure tournante

(30) Priority: 22.01.2007 US 625673
(43) Date of publication of application: 30.07.2008
(73) Proprietor: Honeywell International Inc., Morristown NJ 07960 (US)
(72) Inventor: Ishihara, Yasuo, Kirkland, WA 98034 (US); Johnson, Steve C., Issaquah, WA 98029 (US); Conner, Kevin J., Kent, WA 98031 (US)
(74) Representative: Buckley, Guy Julian

(56) References cited:
- US-A1- 2002 030 607
- US-A1- 2005 270 180

## Description

### BACKGROUND OF THE INVENTION

Helicopter pilots often do not realize that they are landing with significant tailwind or at excessive rate of descent, which can potentially cause them to enter a "Settling with Power" state. A Settling with Power state is a phenomenon where a helicopter settles into its own downwash, also known as "Vortex Ring State". When the helicopter enters a Settling with Power state near the ground, often it is not recoverable. The helicopter can enter a Settling with Power state when the following three conditions are met: 1) descending at more than 300 feet per minute; 2) airspeed becomes less than the effective translational lift speed (typically around 30 knots); and 3) the engine is using more than a certain percent of available power. If the pilot can avoid meeting at least one of the three conditions, the issue goes away.

One of the most common ways of entering a Settling with Power state is by approaching with tailwind. As the helicopter nears the landing zone, the pilot starts slowing down the helicopter's ground speed and at the same time starts applying power to arrest descent rate. If the pilot does not realize the tailwind exists, the helicopter can easily be flown below the effective translational lift speed. When an approach is made to an airport or helicopter landing pad, the wind conditions can easily be determined. However, when the helicopter approaches to an unimproved landing site, such as an auto accident scene, it is often difficult to judge the wind direction.

Document US 2005/270180 describes the preamble of claim 1.

Therefore, there exists a need to inform a helicopter pilot when an approach to landing might put them in a Settling with Power state.

### SUMMARY OF THE INVENTION

The present invention provides systems and methods for generating an alert if a rotary wing aircraft is approaching a hazardous situation. In an example method a processor receives a wind value and a rate of descent value. An alert signal is generated if the received wind value is greater than a tailwind threshold value and the rate of descent value is greater than a rate of descent threshold value. The generated alert is outputted to an output device, such a display device or speakers.

In one aspect of the present invention, the alert signal is further generated if the rotary wing aircraft is on approach to landing.

In another aspect of the present invention, the alert signal is further generated if a rate of change of heading is less than a predefined value.

In still another aspect of the present invention, the alert signal is further generated if a rate of change in speed is less than a predefined value.

### BRIEF DESCRIPTION OF THE DRAWINGS

Preferred and alternative embodiments of the present invention are described in detail below with reference to the following drawings:

FIGURE 1 illustrates a schematic block diagram of an exemplary system formed in accordance with an embodiment of the present invention; and

FIGURE 2 illustrates an example process performed by the system shown in FIGURE 1.

### DETAILED DESCRIPTION OF THE PREFERRED EMBODIMENT

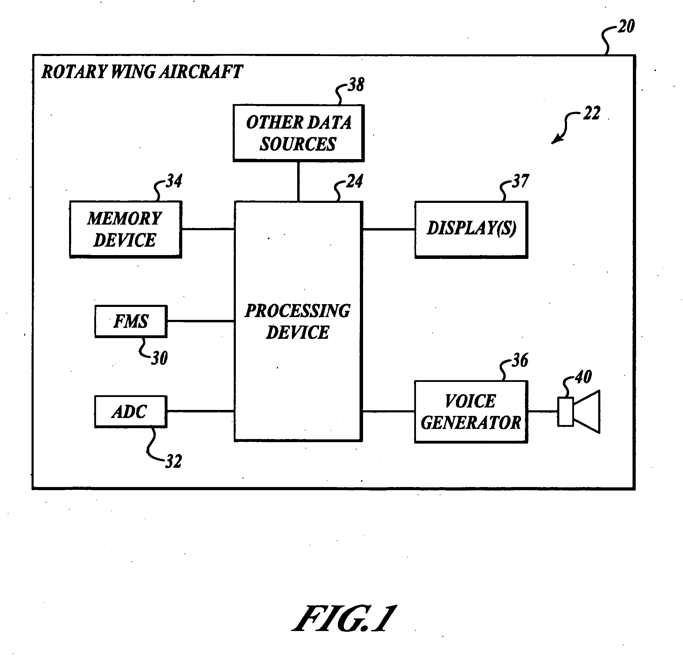

As shown in FIGURE 1, a rotary wing aircraft 20 includes a system 22 for providing information assistance to pilots with regard to an approach to land. The system 22 includes a processing device 24 that is in data communication with a memory device 34 and flight or aircraft configuration sensors either directly (other data sources 38 such as by using discrete signals) or via a Flight Management System (FMS) 30, an Air Data Computer (ADC) 32, and/or Global Positioning System (GPS) (not shown). Also, the processing device 24 is in data communication with one or more displays 37 (or indicators) and a voice generator 36 that is connected to one or more speakers 40.

If the processing device 24 determines that flight parameters that are received from the FMS 30 or directly from other data sources 38 indicate that two of the conditions for a Settling with Power state are satisfied, then the processing device 24 produces an advisory(ies) that is outputted via either one of the displays 37 or the speakers 40 via the voice generator 36.

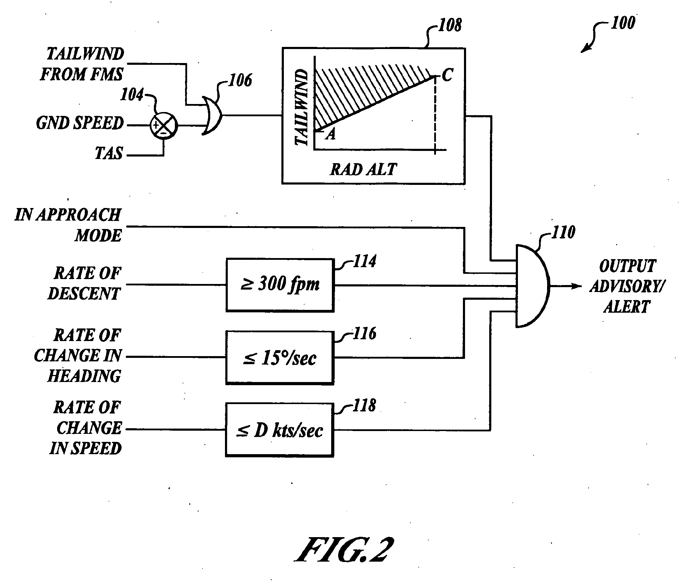

FIGURE 2 illustrates an example process 100 (i.e., logic diagram) that is performed by the processing device 24 of FIGURE 1. An advisory or alert is outputted by the processing device 24 if the tailwind is greater than a threshold amount based on the rotary wing aircraft's present altitude above the ground and the rate of descent of the rotary aircraft is greater than or equal to a predefined threshold.

In one embodiment, the tailwind value can be received directly from another aircraft system, such as the FMS 30, and/or is determined by subtracting true airspeed (TAS) from ground speed, as shown at combiner 104 and OR gate 106. Block 108 illustrates an example graph that shows the threshold of tailwind relative to height above ground as received from a radar altimeter. The height above ground may also be received from another source, such as GPS and stored terrain height information. In one embodiment, a lower limit of the threshold for a tailwind A is approximately 5 knots at 25 feet of elevation. An upper limit of the tailwind threshold C is approximately 10 knots at a rotary wing aircraft elevation of approximately 300 feet. These threshold values may vary depending on desires of the operators of the rotary wing aircraft. Also, the threshold line that connects A to C need not be a straight line but may also be curved or any shape as desired by the operator of the rotary wing aircraft.

The rate of descent is received from any of a number of sources, such as the FMS 30, ADC 32, or GPS, and is compared at block 114 to a predefined threshold value. In one embodiment the threshold value for the rate of descent is 300 feet per minute. An AND gate 110 receives the output of the comparator blocks 108 and 114 and outputs a "tailwind" advisory/alert if both of the conditions are satisfied in the comparator blocks 108 and 114. Output of "tailwind" advisory/alert can be in any of a number of a different formats, for example, it may be an audible alert generated by the voice generator 36 and output through one or more of the speakers 40 or it may be a visual alert that is presented in any of the displays 40 or indicators that are viewable by the rotary wing aircraft pilots.

In another embodiment, the AND gate 110 also receives a signal that identifies if the aircraft is in the approach mode. This determination may be made by either one of the processing device 24 or some other aircraft system, such as the FMS 30. The approach mode determination may be made any of number of different ways using various information, such as height above the ground, rotary wing aircraft speed, power setting and/or descent rate.

In another embodiment, the AND gate 110 may also receive an indication from comparator blocks 116 and 118 that would help to limit nuisance alerts. First, at the comparator block 116, a rate of change of heading of the rotary wing aircraft as received from any of a number of different sources, such as the FMS 30, is determined if it is less than a predefined rate, for example, 15°/sec. Other rates may be used depending upon operator preference. If the aircraft is changing heading greater than this threshold value, then the output of the advisory/alert will not occur. At the comparator block 118, a rate of change in speed of the rotary wing aircraft as received from any of a number of sources, such as a GPS or the FMS 30, is determined if it is below a threshold rate of change value. If the rate of change in speed of the rotary wing aircraft is greater than the predefined rate of change in speed value (Dkts/sec) then an output of the advisory/alert will not occur. An example of the threshold rate of change in speed (Dkts/sec) is 5 knots per second.

The comparisons performed at the comparator blocks 116 and 118 help to confirm that the rotary wing aircraft is maintaining its approach to a possible Settling with Power situation. A change in heading or change speed greater than predefined thresholds may remove the aircraft from this Settling with Power situation or may just cause some of the other compared data to be inaccurate.

The processing device 24 or functions performed by the processing device 24 may be included as part of other devices, such as the FMS 30 or a Rotary Wing Enhanced Ground Proximity Warning System (RWEGPWS) (not shown), or may be a separate unit.

## Claims

1. A method for generating an alert if a rotary wing aircraft is approaching a hazardous situation, a method comprising:
receiving a wind value;
receiving a rate of descent value of the rotary wing aircraft;
**characterized by**
generating an alert signal if the received wind value is greater than a tailwind threshold value and the received rate of descent value is greater than a rate of descent threshold value; and
outputting the generated alert signal.

2. The method of Claim 1, further comprising determining if the rotary wing aircraft is on approach to landing based on flight information, wherein the alert signal is further generated if it is determined that the rotary wing aircraft is on approach to landing.

3. The method of Claim 1, further comprising receiving a rate of change of heading value of the rotary wing aircraft, wherein the alert signal is further generated if the received rate of change of heading value is less than a predefined value.

4. The method of Claim 1, further comprising receiving a rate of change in speed of the rotary wing aircraft, wherein the alert signal is further generated if the received rate of change in speed is less than a predefined value.

5. The method Claim 1, further comprising receiving an altitude value, wherein the alert signal is further generated based on if the received wind speed value is greater than a tailwind threshold value at a predefined altitude value.

6. A system for generating an alert if a rotary wing aircraft is approaching a hazardous situation, a system comprising:
an output device;
a first component configured to determine wind speed and direction relevant to the rotary wing aircraft;
a second component configured to determine rate of descent of the rotary wing aircraft; a **characterized by**
a processor in data communication with the output device and the first and second components, the processor being configured to receive the determined wind speed and direction and the determined rate of descent, to generate an alert signal if the received wind value is greater than a tailwind threshold value and the rate of descent is greater than a rate of descent threshold value, and to send the generated alert signal to the output device.

7. The system of Claim 6, wherein the processor further determines if the rotary wing aircraft is on approach to landing based on flight information received from other aircraft systems and further generates the alert signal if the rotary wing aircraft is determined to be on approach to landing.

8. The system of Claim 6, wherein the processor further generates the alert signal if a rate of change of heading value is less than a predefined value.

9. The system of Claim 6, wherein the processor further generates the alert signal if a rate of change in speed is less than a predefined value.

10. The system Claim 6, wherein the processor further generates the alert signal if a wind speed value is greater than a tailwind threshold value at a predefined altitude value.

## Patentansprüche

1. Verfahren zum Erzeugen einer Warnung, wenn sich ein Drehflügelflugzeug einer gefährlichen Situation nähert, wobei das Verfahren die folgenden Schritte umfasst:
Empfangen eines Windwerts;
Empfangen eines Absinkratenwerts des Drehflügelflugzeugs;
**gekennzeichnet durch** Erzeugen eines Warnsignals, wenn der empfangene Windwert größer als ein Rückenwind-Schwellenwert ist und der empfangene Absinkratenwert größer als ein Absinkratenwerts-Schwellenwert ist; und
Ausgeben des erzeugten Warnsignals.

2. Verfahren nach Anspruch 1, bei dem ferner auf der Basis von Fluginformationen bestimmt wird, ob sich das Drehflügelflugzeug im Landeanflug befindet, wobei das Warnsignal ferner erzeugt wird, wenn bestimmt wird, dass sich das Drehflügelflugzeug im Landeanflug befindet.

3. Verfahren nach Anspruch 1, bei dem ferner ein Kursänderungsratenwert des Drehflügelflugzeugs empfangen wird, wobei das Warnsignal ferner erzeugt wird, wenn der empfangene Kursänderungsratenwert kleiner als ein vordefinierter Wert ist.

4. Verfahren nach Anspruch 1, bei dem ferner ein Geschwindigkeitsänderungsratenwert des Drehflügelflugzeugs empfangen wird, wobei das Warnsignal ferner erzeugt wird, wenn die empfangene Geschwindigkeitsänderungsrate kleiner als ein vordefinierter Wert ist.

5. Verfahren nach Anspruch 1, bei dem ferner ein Höhenwert empfangen wird, wobei das Warnsignal ferner abhängig davon erzeugt wird, ob der empfangene Windgeschwindigkeitswert größer als ein Rückenwind-Schwellenwert bei einem vordefinierten Höhenwert ist.

6. System zum Erzeugen einer Warnung, wenn sich ein Drehflügelflugzeug einer gefährlichen Situation nähert, wobei das System Folgendes umfasst:
eine Ausgabeeinrichtung;
eine erste Komponente, die dafür ausgelegt ist, für das Drehflügelflugzeug relevante Windgeschwindigkeit und -richtung zu bestimmen;
eine zweite Komponente, die dafür ausgelegt ist, die Absinkrate des Drehflügelflugzeugs zu bestimmen; **gekennzeichnet durch**
einen Prozessor in Datenkommunikation mit der Ausgabeeinrichtung und der ersten und der zweiten Komponente, wobei der Prozessor dafür ausgelegt ist, die bestimmte Windgeschwindigkeit und -richtung und die bestimmte Absinkrate zu empfangen, ein Warnsignal zu erzeugen, wenn der empfangene Windwert größer als ein Rückenwind-Schwellenwert ist und die Absinkrate größer als ein Absinkraten-Schwellenwert ist, und das erzeugte Warnsignal zu der Ausgabeeinrichtung zu senden.

7. System nach Anspruch 6, wobei der Prozessor ferner auf der Basis von aus anderen Flugzeugsystemen empfangenen Fluginformationen bestimmt, ob sich das Drehflügelflugzeug im Landeanflug befindet, und ferner das Warnsignal erzeugt, wenn bestimmt wird, dass sich das Drehflügelflugzeug im Landeanflug befindet.

8. System nach Anspruch 6, wobei der Prozessor ferner das Warnsignal erzeugt, wenn ein Kursänderungsratenwert kleiner als ein vordefinierter Wert ist.

9. System nach Anspruch 6, wobei der Prozessor ferner das Warnsignal erzeugt, wenn eine Geschwindigkeitsänderungsrate kleiner als ein vordefinierter Wert ist.

10. System nach Anspruch 6, wobei der Prozessor ferner das Warnsignal erzeugt, wenn ein Windgeschwindigkeitswert größer als ein Rückenwind-Schwellenwert bei einem vordefinierten Höhenwert ist.

## Revendications

1. Procédé de génération d'une alerte si un aéronef à voilure tournante s'approche d'une situation dangereuse, comprenant :
la réception d'une valeur de vent ;
la réception d'une valeur de vitesse de descente de l'aéronef à voilure tournante ;
**caractérisé par**
la génération d'un signal d'alerte si la valeur de vent reçue est supérieure à une valeur de seuil de vent arrière et la valeur de vitesse de descente reçue est supérieure à une valeur seuil de vitesse de descente, ; et
la production du signal d'alerte généré.

2. Procédé selon la revendication 1, comprenant en outre la détermination si l'aéronef à voilure tournante est en phase d'approche d'atterrissage en fonction des informations de vol, dans lequel le signal d'alerte est en outre généré s'il est déterminé que l'aéronef à voilure tournante est en phase d'approche d'atterrissage.

3. Procédé selon la revendication 1, comprenant en outre la réception d'une valeur de vitesse de changement de cap de l'aéronef à voilure tournante, dans lequel le signal d'alerte est en outre généré si la valeur de vitesse de changement de cap reçue est inférieure à une valeur prédéfinie.

4. Procédé selon la revendication 1, comprenant en outre la réception d'une vitesse de changement de la vitesse de l'aéronef à voilure tournante, dans lequel le signal d'alerte est en outre généré si la vitesse de changement de vitesse reçue est inférieure à une valeur prédéfinie.

5. Procédé selon la revendication 1, comprenant en outre la réception d'une valeur d'altitude, dans lequel le signal d'alerte est en outre généré selon que la valeur de vent reçue est supérieure à une valeur de seuil de vent arrière à une valeur d'altitude prédéfinie.

6. Système de génération d'une alerte si un aéronef à voilure tournante s'approche d'une situation dangereuse, comprenant :
un dispositif de sortie ;
un premier composant configuré pour déterminer des vitesse et sens de vent relatifs à l'aéronef à voilure tournante ;
un second composant configuré pour déterminer une vitesse de descente de l'aéronef à voilure tournante ;
**caractérisé par**
un processeur de communication de données avec le dispositif de sortie et les premier et second composants, le processeur étant configuré pour recevoir les vitesse et sens de vent déterminés ainsi que la vitesse de descente, de générer un signal d'alerte si la valeur de vent reçue est supérieure à une valeur seuil de vent arrière et la vitesse de descente est supérieure à une valeur seuil de vitesse de descente, et envoyer le signal d'alerte généré au dispositif de sortie.

7. Système selon la revendication 6, dans lequel le processeur détermine en outre si l'aéronef à voilure tournante est en phase d'approche d'atterrissage en fonction des informations de vol reçues d'autres systèmes d'aéronef, et génère en outre le signal d'alerte s'il est déterminé que l'aéronef à voilure tournante est en phase d'approche d'atterrissage.

8. Système selon la revendication 6, dans lequel le processeur génère en outre le signal d'alerte si une valeur de vitesse de changement de cap est inférieure à une valeur prédéfinie.

9. Système selon la revendication 6, dans lequel le processeur génère en outre le signal d'alerte si une vitesse de changement de vitesse est inférieure à une valeur prédéfinie.

10. Système selon la revendication 6, dans lequel le processeur génère en outre le signal d'alerte si une valeur seuil de vent est supérieure à une valeur seuil de vent arrière à une valeur d'altitude prédéfinie.
